## Europäisches Patentamt
## European Patent Office
## Office européen des brevets

(19)

(11) Veröffentlichungsnummer : **0 022 151**
**B1**

(12) **EUROPÄISCHE PATENTSCHRIFT**

(45) Veröffentlichungstag der Patentschrift :
**13.07.83**

(21) Anmeldenummer : **80102152.8**

(22) Anmeldetag : **22.04.80**

(51) Int. Cl.³ : **B 23 K   7/02**, B 22 D 11/126

(54) **Verfahren und Einrichtung zum thermischen Längsteilen von rechteckförmigen Metallplatinen, insbes. von abgelängten Stranggussbrammen.**

(30) Priorität : **16.06.79 DE 2924365**

(43) Veröffentlichungstag der Anmeldung :
**14.01.81 Patentblatt 81/02**

(45) Bekanntmachung des Hinweises auf die Patenterteilung : **13.07.83 Patentblatt 83/28**

(84) Benannte Vertragsstaaten :
**AT BE FR GB LU NL**

(56) Entgegenhaltungen :
**EP A 0 007 969**
**DE A 2 703 702**
**DE A 2 842 503**
**DE B 1 300 792**
**FR A 1 380 831**
**FR A 2 374 987**
**GB A 1 106 034**

(73) Patentinhaber : **Mannesmann Demag AG**
**Wolfgang-Reuter-Platz**
**D-4100 Duisburg (DE)**

(72) Erfinder : **Komma, Gerhard, Dipl.-Ing.**
**Bussardstrasse 21**
**D-4220 Dinslaken (DE)**
Erfinder : **Lohse, Dietmar**
**Waldstrasse 42**
**D-4230 Wesel 1 (DE)**

(74) Vertreter : **Flaig, Siegfried, Dipl.-Ing. (FH)**
**Mannesmann AG Mannesmannufer 2**
**D-4000 Düsseldorf (DE)**

Jouve, 18, rue St-Denis, 75001 Paris, France

# Verfahren und Einrichtung zum thermischen Längsteilen von rechteckförmigen Metallplatinen, insbes. von abgelängten Stranggussbrammen

Die Erfindung betrifft ein Verfahren und eine zu dessen Ausübung besonders vorteilhafte Einrichtung zum thermischen Längsteilen von rechteckförmigen Metallplatinen, insbesondere von abgelängten Stranggußbrammen, während dem die Metallplatinen auf zur Längsteilrichtung quer verlaufenden Unterstützungen aufliegen.

Das thermische Trennen auf der Grundlage des Sauerstoffbrennschneidens bzw. des Plasmabrennschneidens dient bei der Querteilung von als Strang gegossenem Stahl oder NE-Metallen der Vorbereitung für das nachfolgende Walzen, wobei das Querteilen die Länge, z. B. das Bundgewicht, des auszuwalzenden Bleches bestimmt. Demgegenüber stellen sich die Verhältnisse beim Längsteilen der Metallplatinen anders dar, weil dort die gewünschte Breite des auszuwalzenden Bleches festgelegt wird. In den letzten Jahren ging das Bestreben dahin, im Stranggießen die Ausstoßleistung durch Erhöhen der Chargengewichte und durch größere Strangbreiten zu steigern. Breitere Stränge gestatten zwar eine wirtschaftlichere Erzeugung des Gießproduktes unter maximaler Ausnutzung der Stranggießanlagen, jedoch müssen die breiteren Stränge auf die vorhandenen Anstichquerschnitte der Walzwerke zurückgeführt werden, deren Abmessungen sich wiederum zwangsläufig nach den in der Weiterverarbeitung benötigten Blechbreiten richten.

Es ist bekannt (DE-B 27 10 564), zur Erfüllung dieses Erfordernisses wie beim Querteilen der Stranggußbrammen den Schneidstrahl relativ zur Bramme zu bewegen, wobei gemäß diesem Vorschlag gegenüber dem Querteilen nur unterschiedlich ist, daß sich die Bramme in Ruhestellung befindet. Das bekannte Längsteilverfahren erfordert allerdings besondere Maßnahmen zum Schutz der zur Längsteilrichtung quer verlaufenden Unterstützungen. So ist eine unterschiedliche Ausbildung von quer zur Längsteilrichtung vorhandenen Unterstützungen erforderlich. Zunächst sorgen einzeln angetriebene Rollen für den An- bzw. Abtransport der Brammen bzw. längsgeteilten Brammen. Diese Rollen müssen abschwenkbar sein, um während des Brennschnitts nicht zerstört zu werden. Sodann sind quer verlaufende starre Brammenauflagen vorgesehen, die für den Weg des Schneidstrahls sogenannte Brennstellenöffnungen aufweisen müssen. Die im Weg des Schneidstrahls angeordneten Brennstellenöffnungen ergeben einen spaltartigen Brennkanal, dessen Länge entsprechend der Brammenlänge, also z. B. 8 m und mehr, sehr ausgedehnt ausfällt. Nachteilig ist ferner, daß aus dem langen Brennkanal die Schlacke und eine erhöhte Gasmenge abgeführt werden müssen. Der Brennkanal ist außerdem fest eingebaut und gestattet keine Umstellung auf veränderte Breiten der längszuteilenden Brammen.

Die nicht vorveröffentlichte, jedoch prioritätsältere EP-A-007 969 zeigt bzw. beschreibt ein Verfahren zum thermischen Längsteilen von rechteckförmigen Metallplatinen, nämlich von abgelängten Stranggußbrammen, während dem die Metallplatinen auf zur Längsteilrichtung quer verlaufenden Unterstützungen, nämlich Rollgangsrollen, aufliegen. Hierbei ist der Schneidbrenner unbeschränkt feststehend, und die Bramme wird in Längsteilrichtung bewegt. Die an einem Ort anfallende Schlacke wird quer zur Längsteilrichtung zwischen zwei Rollgangsrollen mittels einer Schüttelrinne abgefördert. Diese Lösung dient vorrangig dem Problem, an der Schnittstelle, die sonst üblichen Schlackenbärte zu vermeiden, was der Vorschlag aufgrund eines Abdeckteils, das später wieder entfernt wird, zu erreichen versucht.

Der Erfindung liegt die Aufgabe zugrunde, die bekannte Verfahrenstechnik zu vereinfachen, um darauf aufbauend zu einer vorteilhafteren, d. h. teils besser geschützten, teils weniger aufwendigen Einrichtung zu gelangen.

Die Erfindung löst diese Aufgabe aufgrund des Verfahrens zum thermischen Längsteilen von rechteckförmigen Metallplatinen, insbesondere von abgelängten Stranggußbrammen, während dem die Metallplatinen auf zur Längsteilrichtung querverlaufenden Unterstützungen aufliegen, wobei die Metallplatinen gegenüber dem in Längsteilrichtung unbeweglichen Schneidstrahl der abhängig vom Verlauf der Längsseitenränder der Metallplatinen quer zur Längsteilrichtung bewegt wird, in Längsteilrichtung bewegt werden und wobei die unter dem Schneidstrahl anfallende Schlacke quer zur Längsteilrichtung zwischen zwei als Rollgangsrollen ausgebildeten Unterstützungen abgefördert wird. Dieser Vorschlag folgt weder dem Querteilprinzip, bei dem der Gußstrang mit Gießgeschwindigkeit bewegt wird, der der Schneidstrahl folgt, noch dem bekannten Prinzip, bei dem sich die Stranggußbramme in Ruhestellung befindet. Vorteilhaft ist demnach, daß weder abschwenkbare Unterstützungsrollen noch ein relativ langer Brennkanal notwendig sind, sondern daß sich der Brennkanal zwischen zwei vorhandenen Stützrollen in natürlicher Weise ergibt. Dementsprechend ist der Brennkanal kurz, und die anfallende Brennschlacke kann auf kurzem Weg abtransportiert werden. Ferner ergibt sich eine Verringerung des Gasabzugsvolumens und dementsprechend geringere Leistungen der Antriebe für die Gasabsaugung. Ein anderer Vorteil der Erfindung besteht darin, daß schwere quer verschiebbare Zentriereinrichtungen vermieden werden, an deren Stelle entsprechende Steuerungsanlagen treten, die die weitaus leichteren Schneidstrahleinrichtungen bewegen. Ein weiterer Vorteil besteht in der Möglichkeit, das Breiten-Programm ohne Verlegung der Brennstellenöffnungen ändern zu können, also z. B. Teilungen von 1/2, 1/3, 1/4 und dgl. kurzfristig einzuführen.

Eine hohe Schneidleistung kann nunmehr nach einer weiteren Verbesserung der Erfindung erzielt werden, indem zumindest zwei Metallplatinen gleichzeitig gegenüber jeweils in Längsteilrichtung unbeweglichen Schneidstrahlen bewegt werden. Die Verdoppelung der Schneidleistung führt zu einem höheren Ausbringen an geschnittenem Gut und zu einer höheren Leistung im Vergleich zu gegenläufig bewegten Schneidmaschinen, die sich beim Zusammentreffen gezwungenermaßen behindern.

Die Leistung beim Längsteilen wird ferner nach einem weiteren Verfahrensvorschlag erhöht, wenn jeweils eine Metallplatine nur teilweise in Längsrichtung geteilt wird, der Schneidstrahl danach abgeschaltet und dieselbe Metallplatine unter einem in Längsteilrichtung in einem Abstand von mehr als einer Platinenlänge vorangestellten Schneidstrahl vollends längsgeteilt wird, währenddem die nachfolgende Metallplatine bei wieder eingeschaltetem Schneidstrahl wiederum nur teilweise in Längsrichtung geteilt wird.

Die Einrichtung zur Ausübung des erfindungsgemäßen Verfahrens ist derart gestaltet, daß zwischen zwei die Metallplatinen auf ihrer vollen Breite unterstützenden, starr angeordneten Rollgangsrollen eine in Längsteilrichtung unbewegliche, quer zur Längsteilrichtung verstellbare Schneidmaschine vorgesehen ist, in deren Bereich ein Treibwalzenpaar liegt, daß unter der Schneidmaschine eine quer zur Längsteilrichtung angeordnete Förderrinne für die anfallende Schlacke vorgesehen ist und daß an die Förderrinne ein Gasabzugsrohr angeschlossen ist. Dabei werden keine abschwenkbaren Rollen oder zusätzliche Unterstützungen benötigt. Die nur querbewegliche Schneidmaschine bedarf einfacherer elektrischer Zuleitungen und Zuleitungen für das Schneidmittel. Die Förderrinne weist entsprechend der Strangbreite relativ kurze Abmessungen auf und bedarf einer geringeren Energieaufnahme. Die Exhaustorleistung des Gasabzugsrohrs ist ebenfalls geringer.

Das Transportieren der noch ungeschnittenen Metallplatine sowie der geschnittenen, längsgeteilten Stücke erfolgt unproblematisch, indem für Teilungs-Längsschnitte zwei Schneidmaschinen, mit einem Abstand, der mindestens so groß wie die maximale Metallplatinenlänge ist, in Längsteilrichtung hintereinander angeordnet sind, und der in Längsteilrichtung ersten Schneidmaschine das Treibwalzenpaar vorgeschaltet und der in Längsteilrichtung zweiten Schneidmaschine das Treibwalzenpaar nachgeschaltet ist, wobei der Abstand zwischen Schneidmaschine und Treibwalzenpaar jeweils kleiner als die jeweilige Schnittlänge bzw. Rest-Schnittlänge einer minimalen Metallplatinenlänge ist.

Die für Breitenkorrekturen erforderliche Querbeweglichkeit der Schneidmaschine kann gleichzeitig dafür ausgenutzt werden, daß die Schneidmaschine quer zur Längsteilrichtung auf unterschiedliche Teilungsbreiten einstellbar ist.

Die geringe Länge der Schlackenförderstrecke gestattet außerdem, daß die Förderrinne aus einer Vibrationsrinne besteht.

Für eine Breitenkorrektur mit Einstellung auf verschiedene Teilungsbreiten ist vorgesehen, daß an der in Längsteilrichtung unbeweglich angeordneten Schneidmaschine Breitentaster zur Abtastung der die Breite begrenzenden senkrechten Flächen der Metallplatinen vorgesehen sind und daß die Steuerung des Querantriebs des Schneidstrahls bzw. der Schneidstrahlen auf eine gleichmäßige Verteilung der Abweichungen auf die Breite der längsgeteilten Stücke eingestellt ist.

Währenddem bei Schneidmaschinen, die in Schneidrichtung bewegt werden, der lange Schneidweg einen höheren Aufwand für Schalldämmung erfordert, gestattet die Erfindung, daß die in Längsteilrichtung ortsfeste Schneidmaschine in einem Gehäuse entsprechend der Größe der Schneidmaschine schallisoliert angeordnet ist.

Die Erfindung vermeidet auch bewegbare Anschläge und sieht vor, daß zumindest einseitig am Rollgang in Höhe der Metallplatinendicke eine starre Anschlagschiene vorgesehen ist.

Eine hohe Schneidleistung bei geringem Flächenaufwand wird nach der Erfindung dann erreicht, wenn mehrere, durch Querschlepper miteinander verbundene Längsteilstrecken parallel nebeneinander angeordnet sind.

Ein Ausführungsbeispiel der Erfindung ist in der Zeichnung dargestellt und wird im folgenden näher beschrieben. Es zeigen

Figur 1 einen Mittelachsen-Längsschnitt durch die erfindungsgemäße Längsteileinrichtung,

Figur 2 eine Draufsicht entsprechend Figur 1,

Figur 3 einen Querschnitt durch die Einrichtung an der Stelle III-III gemäß Figur 2,

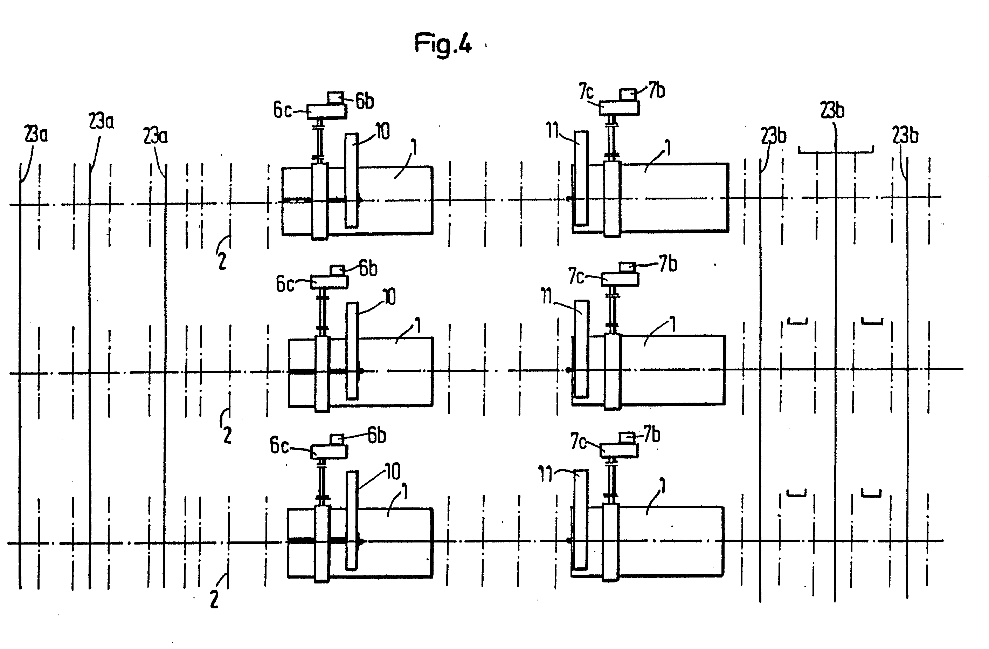

Figur 4 eine Mehrfachanordnung der erfindungsgemäßen Längsteileinrichtung,

Figur 5 ein Blockschaltbild einer elektrischen Steuerung für den erfindungsgemäßen Breitentaster.

Die dem Ausführungsbeispiel zugrundegelegten Metallplatinen 1 bestehen aus Stranggußbrammen, die auf einzeln angetriebenen Rollgangsrollen 2 des Rollgangs, die teilweise symbolisch durch ihre Mittelachse dargestellt sind, in den Bereich der Längsteileinrichtung befördert werden. Die jeweilige (minimale oder maximale) Länge der Metallplatinen 1 ist anlagenspezifisch oder entsprechend der erforderlichen Weiterverarbeitungslänge gewählt.

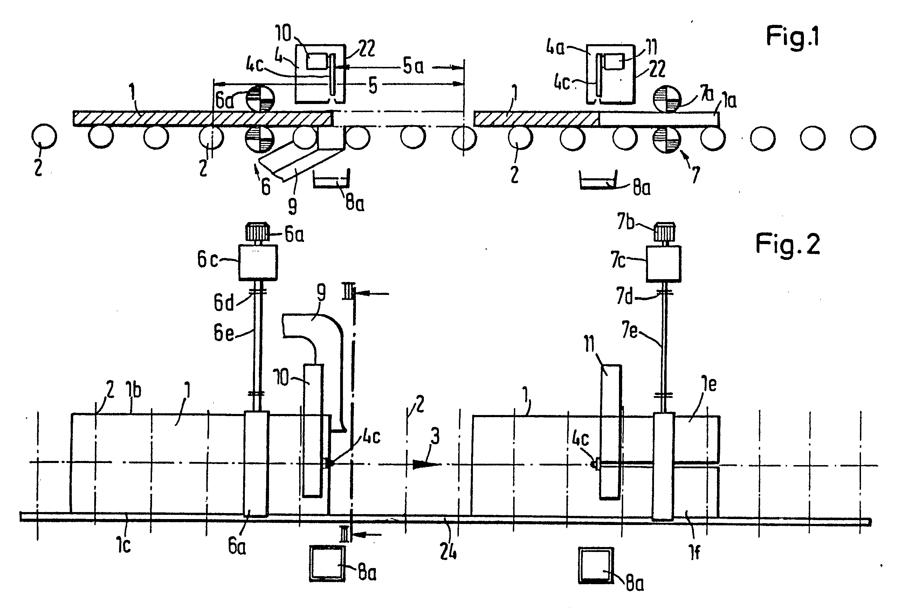

Die Rollgangsrollen 2 sind fest angeordnet und bilden für die Metallplatinen 1 zur Längsteilrichtung 3 querverlaufende Unterstützungen. Zwischen zwei Rollgangsrollen 2 des Rollgangs befindet sich die Schneidmaschine 4. Eine weitere Schneidmaschine 4a ist in Längsteilrichtung 3 im Abstand von einer maximalen Metallplatinenlänge 5 zu der Schneidmaschine 4 vorgesehen. In Fig. 1 ist der halbe Vorschubweg 5a der Metallplatine 1 strichpunktiert eingezeichnet, auf dem das Treibwalzenpaar 6 mit anstellbarer Oberwalze 6a die Metallplatinen 1 jeweils gegenüber der Schneidmaschine 4 vorschiebt. In dieser Phase zieht ein weiteres Treibwalzenpaar 7 mit anstellbarer Oberwalze 7a an den bereits geteilten Metallplatinen 1a, wodurch die Restteilung unter der Schneidmaschine 4a bewirkt wird. Die Treibwalzenpaare 6 bzw. 7 werden jeweils durch Motoren 6b, 7b, Getriebe 6c, 7c, Kupplungen 6d, 7d und Wellen 6e, 7e angetrieben.

Im Ausführungsbeispiel werden jeweils (Sauerstoff-) Schneidstrahlen 4c für die Schneidmaschinen 4 bzw. 4a eingesetzt. Die während des Schneidvorgangs entstehende Schlacke fällt in die Förderrinne 8, unter der Transportbehälter 8a aufgestellt sind. Beim Brennschneiden entstehende Dämpfe und Gase werden durch das Gasabzugsrohr 9 abgesaugt.

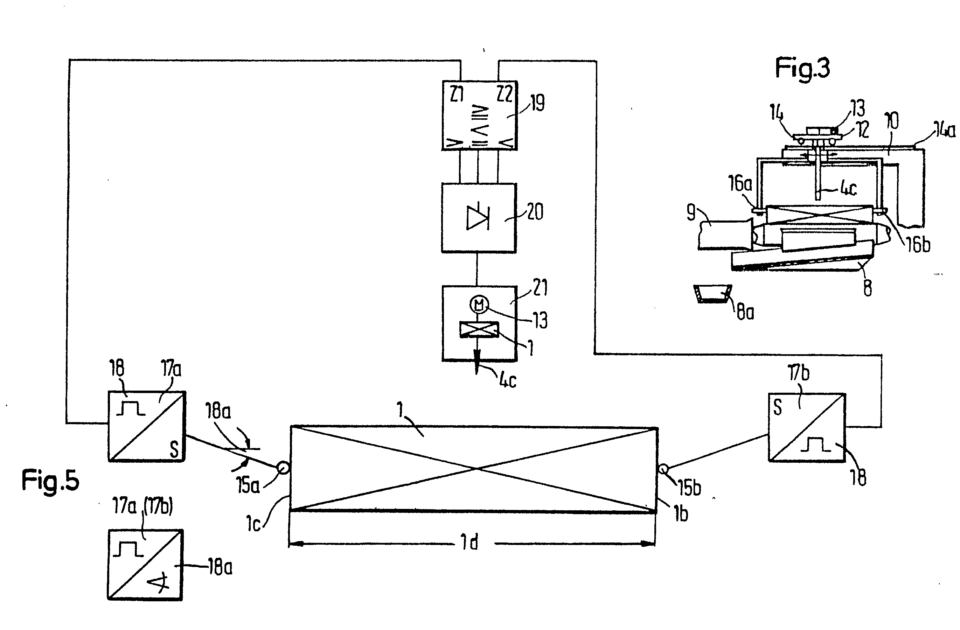

Die Schneidmaschinen 4 bzw. 4a sind an Rahmen 10 bzw. 11 querverschiebbar in weiter nicht dargestellten Führungen gelagert (Fig. 3). Der Querantrieb 12 besteht, wie gezeichnet, aus einem auf dem Rahmen 10 bzw. 11 verfahrbaren Wagen mit einem Antriebsmotor 13. Der Wagen stützt sich über Räder 14 auf Schienen 14a. Auf den Achsen der Räder 14 sind z. B. Zahnräder befestigt, die in eine parallel zu den Schienen 14a verlaufende Zahnstange eingreifen, die selbst fest mit dem Rahmen 10 bzw. 11 verbunden ist.

Die Steuerung des Querantriebs 12 ist entsprechend dem Blockschaltbild gemäß Fig. 5 ausgeführt. An den die Breite 1d begrenzenden senkrechten Flächen 1b, 1c der Metallplatinen 1 liegen fortwährend Breitentaster 15a, 15b an, die, wie in Fig. 3 dargestellt, als Rollen 16a, 16b ausgeführt sind. Die Bewegungen der Breitentaster 15a, 15b werden durch die Wegaufnehmer 17a, 17b gemessen und in ein elektrisches Signal von z. B. rechteckigem Verlauf 18 umgewandelt. Es ist auch eine vom Winkel 18a abhängige Meßmethode anwendbar. Nach Vergleich der beiden Signale in dem Vergleicher 19 wird festgestellt, welches der Signale größer bzw. kleiner ist, wonach der Differenzbetrag jeweils anteilig dem schmaleren bzw. den schmaleren längsgeteilten Stücken 1e, 1f (Figur 2) zugeteilt wird, so daß kontinuierlich gleichmäßig breite Stücke 1e, 1f entstehen. Hierbei werden die Signale aus dem Vergleicher 19 dem Stellgerät 20 übermittelt, das seinerseits auf den Stellantrieb 21 wirkt, der unter anderem aus dem Antriebsmotor 13 besteht.

Die Schneidmaschinen 4 bzw. 4a tragen eine Schallisolation 22 (Fig. 1), um die Einrichtung bei Verwendung von Sauerstoff-Schneidstrahlen umweltfreundlich zu gestalten.

Die erfindungsgemäße Längsteileinrichtung ist seitlich neben der Strangader einer Stranggießanlage angeordnet. Die Leistungsfähigkeit der Längsteileinrichtung wird bei paralleler Anordnung von mehreren Rollgängen, die durch Querschlepper 23a, 23b miteinander verbunden sind, gesteigert.

Diese Anordnung ist zudem flächensparend. Die ankommenden Metallplatinen 1 können mittels der Querschlepper 23a, 23b oder mittels eines Krans auf den jeweils günstigen Rollgang aufgelegt werden, wobei eine grobe Ausrichtung gegen die starre Anschlagschiene 24 genügt, um den Funktionsbereich der Breitentaster 15a, 15b einzugrenzen.

## Ansprüche

1. Verfahren zum thermischen Längsteilen von rechteckförmigen Metallplatinen (1), insbesondere von abgelängten Stranggußbrammen, während dem die Metallplatinen (1) auf zur Längsteilrichtung (3) querverlaufenden Unterstützungen aufliegen, wobei die Metallplatinen (1) gegenüber dem in Längsteilrichtung unbeweglichen Schneidstrahl (4c) der abhängig vom Verlauf der Längsseitenränder der Metallplatinen (1) quer zur Längsteilrichtung (3) bewegt wird, in Längsteilrichtung (3) bewegt werden und wobei die unter dem Schneidstrahl (4c) anfallende Schlacke quer zur Längsteilrichtung zwischen zwei als Rollgangsrollen (2) ausgebildeten Unterstützungen abgefördert wird.

2. Verfahren nach Anspruch 1, dadurch gekennzeichnet, daß zumindest zwei Metallplatinen (1) gleichzeitig gegenüber jeweils in Längsteilrichtung (3) unbeweglichen Schneidstrahlen (4c) bewegt werden.

3. Verfahren nach den Ansprüchen 1 und 2, dadurch gekennzeichnet, daß jeweils eine Metallplatine (1) nur teilweise in Längsrichtung (3) geteilt wird, der Schneidstrahl (4c) danach abgeschaltet und dieselbe Metallplatine (1) unter einem in Längsteilrichtung (3) in einem Abstand von mehr als einer Platinenlänge (5) vorangestellten zweiten Schneidstrahl (4c) vollends längsgeteilt wird, währenddem die nachfolgende Metallplatine (1) bei wiedereingeschaltetem ersten Schneidstrahl (4c) wiederum nur teilweise in Längsrichtung (3) geteilt wird.

4. Einrichtung zur Durchführung des Verfahrens nach den Ansprüchen 1 bis 3, dadurch gekennzeichnet, daß zwischen zwei die Metallplatinen (1) auf ihrer vollen Breite unterstützenden starr angeordneten Rollgangsrollen (2) eine in Längsteilrichtung (3) unbewegliche, quer zur Längsteilrichtung (3) verstellbare Schneidmaschine (4) vorgesehen ist, in deren Bereich ein Treibwalzenpaar (6) liegt, daß unter der Schneidmaschine (4 bzw. 4a) eine quer zur Längsteilrichtung (3) angeordnete Förderrinne (8) für die anfallende Schlacke vorgesehen ist und daß an die Förderrinne (8) ein Gasabzugsrohr (9) angeschlossen ist.

5. Einrichtung nach Anspruch 4, dadurch gekennzeichnet, daß für Teilungs-Längsschnitte zwei Schneidmaschinen (4, 4a) mit einem Abstand, der mindestens so groß wie die maximale Metallplatinenlänge (5) ist, in Längsteilrichtung (3) hintereinander angeordnet sind und der in Längsteilrichtung (3) ersten Schneidmaschine (4) das erwähnte Treibwalzenpaar (6) vorgeschaltet und der in Längsteilrichtung (3) zweiten Schneidmaschine (4a) ein zweites Treibwalzenpaar (7) nachgeschaltet ist, wobei der Abstand zwischen Schneidmaschine und Treibwalzenpaar jeweils kleiner als die jeweilige Schnittlänge bzw. Rest-Schnittlänge einer minimalen Metallplatinenlänge (5) ist.

6. Einrichtung nach den Ansprüchen 4 und 5, dadurch gekennzeichnet, daß die Schneidmaschine (4 bzw. 4a) quer zur Längsteilrichtung (3) auf unterschiedliche Teilungsbreiten einstellbar ist.

7. Einrichtung nach den Ansprüchen 4 bis 6, dadurch gekennzeichnet, daß die Förderrinne (8) aus einer Vibrationsrinne besteht.

8. Einrichtung nach den Ansprüchen 4 bis 7, dadurch gekennzeichnet, daß an der in Längsteilrichtung (3) unbeweglich angeordneten Schneidmaschine (4 bzw. 4a) Breitentaster (15a, 15b) zur Abtastung der die Breite (1d) begrenzenden senkrechten Flächen (1b, 1c) der Metallplatinen (1) vorgesehen sind und daß die Steuerung des Querantriebs (12) des Schneidstrahls bzw. der Schneidstrahlen (4c) auf eine gleichmäßige Verteilung der Abweichungen auf die Breite der längsgeteilten Stücke (1e, 1f) eingestellt ist.

9. Einrichtung nach den Ansprüchen 4 bis 8, dadurch gekennzeichnet, daß die in Längsteilrichtung (3) ortsfeste Schneidmaschine (4 bzw. 4a) in einem Gehäuse (22) entsprechend der Größe der Schneidmaschine (4 bzw. 4a) schallisoliert angeordnet ist.

10. Einrichtung nach den Ansprüchen 4 bis 9, dadurch gekennzeichnet, daß zumindest einseitig am Rollgang (2) in Höhe der Metallplatinendicke (1e, 1f) eine starre Anschlagschiene (24) vorgesehen ist.

11. Einrichtung nach den Ansprüchen 4 bis 10, dadurch gekennzeichnet, daß mehrere durch Querschlepper (23a, 23b) miteinander verbundene Längsteilstrecken parallel nebeneinander angeordnet sind (Figur 4).

**Claims**

1. Process for the thermal slitting of rectangular sheet bars (1), especially of cut-to-length concast slabs, the sheet bars (1) resting on supports arranged transversely to the slitting facility (3) and being moved in slitting direction against the cutting jet (4c). The cutting jet is fixed in the direction of slitting but moved transversely to the direction of slitting (3) as a function of the shape of the longitudinal sheet bar edges. In the process, the slag generated under the cutting jet (4c) is discharged between two supports which take the form of roller table rollers (2).

2. The process according to claim 1, characterized by not less than 2 sheet bars (1) being moved simultaneously against cutting jets (4c) which are fixed in the direction of slitting (3).

3. The process according to claims 1 and 2, characterized by one sheet bar (1) at a time being slit only partly in the longitudinal direction (3) before the cutting jet is switched off and the same sheet bar is slit completely by a second cutting jet (4c) after having covered a distance of more than one sheet bar length (5), while the following sheet bar (1) is being cut, again only partly in the longitudinal direction (3), by the previously switched on again cutting jet (4c).

4. The facility for performing the process according to claims 1 to 3, characterized by a cutter (4) being arranged between two rigidly mounted roller table rollers (2) supporting the sheet bars (1) over their full width ; the cutter being fixed in the direction of slitting (3) but being adjustable transversely to the direction of slitting (3) ; a pair of pinch rolls (6) being located within the range of the roller table rollers ; a discharge trough (8) being provided beneath the cutter (4/4a) for collecting the previously generated slag, and an exhaust gas pipe (9) being connected as required.

5. The facility according to claim 4, characterized by two slitting cutters (4, 4a) being arranged in tandem in the direction of slitting (3) at a distance of not less than the maximum length of the sheet bar (5) ; the pair of previously mentioned pinch rolls (6) preceding the first cutter (4) in the direction of slitting (3) and a second pair of pinch rolls (7) following the second cutter (4a) in the direction of slitting (3) ; the distance between the cutter and the pair of pinch rolls invariably being smaller than the respective cutting length and/or butt length of a minimum sheet bar length (5).

6. The facility according to claims 4 and 5, characterized by the cutter (4/4a) being adjustable to different slitting widths transversely to the direction of slitting (3).

7. The facility according to claims 4 to 6, characterized by the discharge trough (8) being of vibratory feeder design.

8. The facility according to claims 4 to 7, characterized by the cutter (4/4a) which is fixed in the direction of slitting (3) having width tracers (15a, 15b) to trace the vertical faces (1b, 1c) limiting the width (1d) of the sheet bar, and the cross travel (12) of the cutting jet or cutting jets (4c) being set-controlled to provide a uniform distribution of the prevailing variations over the width of the previously slit pieces (1e, 1f).

9. The facility according to claims 4 to 8, characterized by the cutter (4/4a), fixed in the direction of slitting (3), being arranged, soundproof-fashion, in a casing (22) fitting the size of the cutter (4/4a).

10. The facility according to claims 4 to 9, characterized by a rigid stop rail (24) being provided at sheet bar thickness level (1e, 1f) at least on one side of the roller table (2).

11. The facility according to claims 4 to 10, characterized by several slitting lines, connected by cross transfers (23a, 23b), being arranged parallel side-by-side.

**Revendications**

1. Procédé de refendage thermique de platines métalliques (1) rectangulaires, en particulier de brammes de coulée continue coupées à longueur, dans lequel les platines (1) qui reposent sur des supports perpendiculaires au sens du refendage (3) sont déplacées dans le sens du refendage (3) alors que le faisceau de coupe (4c) est immobile dans le sens refendage et déplaçable perpendiculairement à ce sens (3) en fonction de l'allure des bords longitudinaux des platines (1), la scorie produite sous le faisceau de coupe (4c) étant évacuée perpendiculairement au sens du refendage entre deux supports formant rouleaux de table (2).

2. Procédé suivant spécification 1, caractérisé par le fait qu'au moins deux platines métalliques (1) sont simultanément déplacées par rapport à des faisceaux de coupe (4c) immobiles dans le sens du refendage (3) correspondant.

3. Procédé suivant spécifications 1 et 2, caractérisé par le fait qu'une platine métallique (1) est à chaque fois refendue sur une partie de sa longueur (3) seulement, le faisceau de coupe (4c) désenclenché ensuite et la même platine (1) refendue sur le restant de sa longueur sous un second faisceau de coupe (4c) prévu en aval dans le sens refendage (3) à une distance supérieure à la longueur (5) d'une platine, alors que la platine (1) suivante est à son tour refendue sur une partie seulement de sa longueur (3) par le premier faisceau de coupe (4c) réenclenché.

4. Dispositif pour l'exécution du procédé suivant spécifications 1 à 3, caractérisé par le fait qu'entre deux rouleaux de table (2) stationnaires supportant les platines métalliques (1) sur toute leur largeur est prévue une machine coupeuse (4) immobile dans le sens du refendage (3), à positionnement réglable perpendiculairement au sens du refendage (3), dans la zone de laquelle se trouve une paire de cylindres entraîneurs (6), que sous la machine coupeuse (4 ou 4a) est prévu un couloir d'évacuation (8) perpendiculairement au sens du refendage (3) pour la scorie produite et qu'au couloir d'évacuation (8) est raccordé un tube d'extraction (9) du gaz.

5. Dispositif suivant spécification 4, caractérisé par le fait que pour l'exécution des refendages sont installées dans le sens du refendage (3) deux machines coupeuses (4, 4a) l'une derrière l'autre à une distance au moins égale à la longueur maximale de platine (5) avec en amont de la première machine coupeuse (4) dans le sens du refendage (3) la paire de cylindres entraîneurs (6) citée et en aval de la seconde machine coupeuse (4a) dans le sens du refendage une seconde paire de cylindres entraîneurs (7), la distance entre machine coupeuse et paire de cylindres entraîneurs correspondante étant à chaque fois plus petite que la longueur de la coupe ou de la coupe restante d'une longueur minimale (5) de platine.

6. Dispositif suivant spécifications 4 et 5, caractérisé par le fait que la machine coupeuse (4 ou 4a) est réglable perpendiculairement au sens du refendage (3) sur des largeurs de coupe différentes.

7. Dispositif suivant spécification 4 à 6, caractérisé par le fait que le couloir d'évacuation (8) est constitué par un couloir vibrant.

8. Dispositif suivant spécifications 4 à 7, caractérisé par le fait que sur la machine coupeuse (4 ou 4a) installée immobile dans le sens du refendage (3) sont prévus des détecteurs de largeur (15a, 15b) en contact avec les surfaces verticales (1b, 1c) limitant la largeur des platines métalliques (1) et que la commande du ripeur (12) du ou des faisceaux de coupe (4c) est réglée sur une répartition uniforme des écarts sur la largeur des coupes de refendage (1e, 1f).

9. Dispositif suivant spécifications 4 à 8, caractérisé par le fait que la machine coupeuse (4 ou 4a) stationnaire dans le sens du refendage (3) est installée dans une cabine (22) insonorisée correspondant à la taille de la machine coupeuse (4 ou 4a).

10. Dispositif suivant spécifications 4 à 9, caractérisé par le fait que sur un côté au moins de la table de rouleaux (2) est prévu au niveau de l'épaisseur (1e, 1f) des platines métalliques un rail de butée rigide (24).

11. Dispositif suivant spécifications 4 à 10, caractérisé par le fait que plusieurs lignes de refendage reliées entre elles par des ripeurs (23a, 23b) sont installées en parallèle l'une à côté de l'autre (figure 4).

Fig.1

Fig.2

0 022 151

Fig.3

Fig.5

0 022 151

Fig.4